# DEMANDE DE BREVET EUROPEEN

(11) **EP 1 583 339 A1**
(43) Date de publication de la demande: **05.10.2005**
(21) Numéro de dépôt: 05290695.5
(22) Date de dépôt: 29.03.2005
(51) Int. Cl.: H04M 3/436, H04M 3/42, H04M 7/00

(54) **Procédé et serveur d'acheminement d'appels téléphoniques**

(30) Priorité: 31.03.2004 FR 0403385
(71) Demandeur: FRANCE TELECOM, 75015 Paris (FR)
(72) Inventeur: Polouchkine, Stéphane, 14860 Ranville (FR); Bertin, Emmanuel, 14850 Escoville (FR)
(74) Mandataire: Bentz, Jean-Paul

(57) **Abrégé**

Procédé de gestion d'appels destinés à des utilisateurs de réseaux (2, 3) de télécommunications, comprenant des étapes au cours desquelles : les utilisateurs (10 à 16) introduisent chacun au moins une règle d'acheminement d'appels associant au moins une condition appliquée à une caractéristique d'un appel téléphonique entrant à une action d'acheminement de l'appel entrant; et un serveur d'acheminement d'appels (1) reçoit et détermine les caractéristiques d'un appel entrant, et les règles à lui appliquer, applique les règles déterminées pour identifier des actions à exécuter ; si plusieurs actions alternatives sont obtenues en exécutant les règles déterminées pour l'appel entrant, le serveur d'acheminement d'appels transmet vers l'utilisateur appelé, une notification d'appel entrant indiquant les actions alternatives ; l'utilisateur appelé transmet au serveur (1) une indication de l'action alternative choisie par l'utilisateur appelé ; et le serveur (1) traite l'appel entrant en exécutant l'action alternative choisie par l'utilisateur appelé.

## Description

La présente invention concerne un procédé et un serveur d'acheminement d'appels téléphoniques.

Elle s'applique notamment, mais non exclusivement aux réseaux de télécommunication fixes et mobiles, ainsi qu'aux réseaux de transmission de données publics ou privés, comprenant un serveur d'acheminement d'appels.

Actuellement, les utilisateurs des réseaux de télécommunication, qu'ils soient dans un cadre privé ou professionnel, disposent chacun de nombreux équipements ou moyens de communication leur permettant de communiquer avec d'autres utilisateurs. Or les besoins d'un utilisateur, en termes de communication, dépendent essentiellement du lieu où il se trouve et de ce qu'il est en train de faire.

Dans ce contexte, il est souhaitable d'acheminer les appels destinés à un utilisateur, où qu'il soit et quoi qu'il fasse et ce, de façon adaptée à sa situation quelle qu'elle soit. Cet acheminement devrait être effectué d'une manière totalement transparente pour l'utilisateur, c'est-à-dire sans qu'il lui soit nécessaire d'intervenir pour avertir de tout changement de situation. Pour l'utilisateur appelant, cet acheminement doit également être transparent, c'est-à-dire que l'émetteur ne doit pas avoir à se préoccuper de choisir un terminal avec lequel il souhaite établir une communication avec l'utilisateur appelé.

Actuellement, les systèmes de communication offrent plusieurs services activables à l'arrivée d'un appel téléphonique comme par exemple le renvoi de l'appel vers une boîte vocale, ou vers un autre poste. Ces systèmes choisissent le ou les services à déclencher selon des critères en général binaires. Il en résulte que l'utilisateur destinataire de l'appel ne dispose d'aucun moyen pour choisir la manière dont l'appel doit être traité, de manière à tenir compte du lieu ou de l'activité courante de l'utilisateur. Par exemple, si l'utilisateur destinataire d'un appel ne veut pas être dérangé, il est souhaitable de renvoyer vers la messagerie vocale les appels provenant d'appelants inconnus. En revanche, si l'appelant est connu de l'utilisateur, celui-ci peut souhaiter prendre l'appel sur son téléphone fixe, ou bien sur son téléphone mobile par transfert d'appel s'il veut éviter de déranger d'autres personnes.

La Demanderesse a mis au point un système décrit dans la demande de brevet FR 02 02976 permettant à l'appelant de choisir le traitement à appliquer à son appel, en tenant compte notamment de contraintes spécifiées par l'utilisateur appelé, définies éventuellement en fonction de l'identité de l'utilisateur appelant, et de l'état libre ou occupé de la ligne téléphonique de l'appelé.

Toutefois, ce système ne permet pas à l'utilisateur destinataire de choisir le traitement à appliquer à chaque appel entrant qui lui est destiné, au moment où celui-ci est reçu.

La présente invention a pour but de supprimer cet inconvénient. Cet objectif est atteint par la prévision d'un procédé de gestion d'appels destinés à des utilisateurs de réseaux de télécommunications, chacun des utilisateurs disposant d'au moins un moyen de télécommunication connectable à l'un des réseaux de télécommunication, le procédé comprenant des étapes au cours desquelles :
- les utilisateurs introduisent chacun au moins une règle d'acheminement d'appels associant au moins une condition appliquée à une caractéristique d'un appel entrant à une action d'acheminement de l'appel entrant, et
- un serveur d'acheminement d'appels reçoit un appel téléphonique entrant destiné à un utilisateur, détermine les caractéristiques de l'appel entrant et les règles à appliquer à l'appel entrant, applique les règles déterminées pour identifier les actions à appliquer à l'appel entrant, et exécute les actions identifiées sur l'appel entrant.

Selon l'invention, au moins certaines règles d'acheminement d'appels spécifiées par les utilisateurs comprennent plusieurs actions alternatives à sélectionner par l'utilisateur appelé au moment de la réception de l'appel entrant, le procédé comprenant en outre des étapes au cours desquelles :
- si plusieurs actions alternatives sont obtenues en exécutant les règles déterminées pour l'appel entrant, le serveur d'acheminement d'appels transmet vers un moyen de communication accessible de l'utilisateur appelé, une notification d'appel entrant indiquant les actions alternatives parmi lesquelles l'utilisateur appelé doit effectuer un choix,
- le moyen de communication de l'utilisateur appelé transmet au serveur d'acheminement d'appels une indication de l'action alternative choisie par l'utilisateur appelé, et
- le serveur d'acheminement d'appels traite l'appel entrant en exécutant l'action alternative choisie par l'utilisateur appelé.

Selon un mode de réalisation de l'invention, chacune des conditions des règles d'acheminement d'appels entrants porte sur au moins l'une des informations suivantes :
- l'identité de l'utilisateur appelant,
- l'identité du premier utilisateur appelant en cas de renvoi d'appel,
- un état "occupé" ou "non réponse" du moyen de communication demandé par l'utilisateur appelant,
- la date et heure de réception de l'appel,
- un niveau de priorité attribué à l'appel entrant,
- un état de présence de l'appelé, indiquant si l'appelé est accessible par au moins un terminal de communication,
- l'état du réseau,
- la localisation de l'appelé, et
- des événements extérieurs au système.

Selon un autre mode de réalisation de l'invention, les actions d'acheminement d'appels sont sélectionnées parmi les actions suivantes lors de l'introduction des règles d'acheminement d'appels entrants :
- notifier l'utilisateur appelé pour l'informer de l'arrivée d'un appel entrant,
- acheminer l'appel vers un service spécifié activable appartenant à l'ensemble des services auxquels l'utilisateur appelé a souscrit et qui sont utilisables dans le cadre du service d'acheminement d'appels,
- rejeter l'appel, et
- proposer une liste de services alternatifs activables appartenant à cet ensemble de services, et dans laquelle l'utilisateur appelé doit effectuer une sélection.

Selon un autre mode de réalisation de l'invention, ce procédé comprend en outre une étape de détermination d'un état d'accessibilité de chacun des moyens de télécommunication de chacun des utilisateurs.

Selon un autre mode de réalisation de l'invention, ce procédé comprend en outre une étape de configuration du service d'acheminement d'appels au cours de laquelle chaque utilisateur spécifie un profil d'utilisateur regroupant :
- des paramètres nécessaires au serveur d'acheminement d'appels comportant des paramètres d'accès aux moyens de communication par lesquels l'utilisateur peut être joint et à des serveurs de gestion de présence auprès desquels l'utilisateur est enregistré et fournissant un état d'accessibilité des moyens de communication,
- des définitions de contextes correspondant chacun à une situation dans laquelle l'utilisateur a prévu de se trouver, chaque contexte étant associé à des règles d'acheminement d'appels respectives à appliquer aux appels entrants, et
- des données d'agenda spécifiant des plages horaires durant lesquelles un contexte est activé.

L'invention concerne également un serveur d'acheminement d'appels destiné à des utilisateurs de réseaux de télécommunications, chacun des utilisateurs disposant d'au moins un moyen de télécommunication connectable à l'un des réseaux de télécommunication, le serveur d'acheminement d'appels comprenant des moyens pour recevoir des appels téléphoniques entrants destinés à des utilisateurs, des moyens pour déterminer les caractéristiques des appels entrants et des règles d'acheminement d'appels spécifiées par les utilisateurs à appliquer aux appels entrants, des moyens pour exécuter les règles afin d'identifier les actions à appliquer aux appels entrants, et des moyens pour exécuter les actions identifiées aux appels entrants.

Selon l'invention, le serveur d'acheminement d'appels comprend en outre :
- des moyens mis à la disposition des utilisateurs pour spécifier des règles d'acheminement d'appels comprenant une ou plusieurs actions alternatives à sélectionner par l'utilisateur appelé au moment de la réception de l'appel entrant,
- des moyens pour transmettre vers un moyen de communication accessible d'un utilisateur appelé, une notification d'appel entrant indiquant les actions alternatives parmi lesquelles l'utilisateur appelé doit effectuer un choix, si plusieurs actions alternatives sont identifiées en exécutant les règles déterminées pour un appel entrant,
- des moyens pour recevoir des indications d'actions alternatives choisies par les utilisateurs appelés, et
- des moyens pour acheminer les appels entrants en exécutant les actions alternatives choisies par les utilisateurs appelés.

Selon un mode de réalisation préféré de l'invention, le serveur d'acheminement d'appels est configuré de sorte que les moyens pour exécuter les actions identifiées aux appels entrants et les moyens pour acheminer les appels entrants en exécutant les actions alternatives choisies par les utilisateurs appelés sont les mêmes.

Avantageusement, le serveur d'acheminement d'appels présente une architecture modulaire comprenant une unité centrale et un ensemble de modules fonctionnels, l'unité centrale étant conçue pour coordonner les traitements effectués par les modules fonctionnels.

Selon un mode de réalisation de l'invention, ce serveur d'acheminement d'appels comprend un module de configuration permettant à chacun des utilisateurs de spécifier un profil d'utilisateur regroupant :
- des paramètres nécessaires au serveur d'acheminement d'appels comportant des paramètres d'accès aux moyens de communication par lesquels l'utilisateur peut être joint et à des serveurs de gestion de présence auprès desquels l'utilisateur est enregistré et fournissant un état d'accessibilité des moyens de communication,
- des définitions de contextes correspondant chacun à une situation dans laquelle l'utilisateur a prévu de se trouver, chaque contexte étant associé à des règles d'acheminement d'appels respectives à appliquer aux appels entrants, et
- des données d'agenda spécifiant des plages horaires durant lesquelles un contexte est activé.

Selon un autre mode de réalisation de l'invention, pour transmettre à un utilisateur appelé une notification d'appel entrant, le serveur d'acheminement d'appels utilise au moins l'un des moyens de communication suivants :
- messagerie électronique,
- messagerie instantanée,
- message SMS,
- déclenchement d'affichage d'une fenêtre en surimpression sur un écran d'ordinateur, et
- déclenchement d'affichage d'une fenêtre en surimpression sur un écran de télévision connecté à un décodeur relié à un réseau IP.

Selon un autre mode de réalisation de l'invention, le serveur d'acheminement d'appels est connecté à au moins l'un des réseaux de téléphonie suivants :
- réseau de téléphonie mobile,
- réseau de téléphonie fixe,
- réseau de téléphonie IP utilisant le protocole SIP.

Un mode de réalisation préféré de l'invention sera décrit ci-après, à titre d'exemple non limitatif, avec référence aux dessins annexés dans lesquels :
La figure 1 représente schématiquement un serveur d'acheminement d'appels téléphoniques intégré dans un environnement de réseaux de télécommunication auxquels sont connectés des terminaux d'utilisateurs ;
La figure 2 montre l'architecture fonctionnelle du serveur d'acheminement d'appels téléphoniques représenté sur la figure 1.

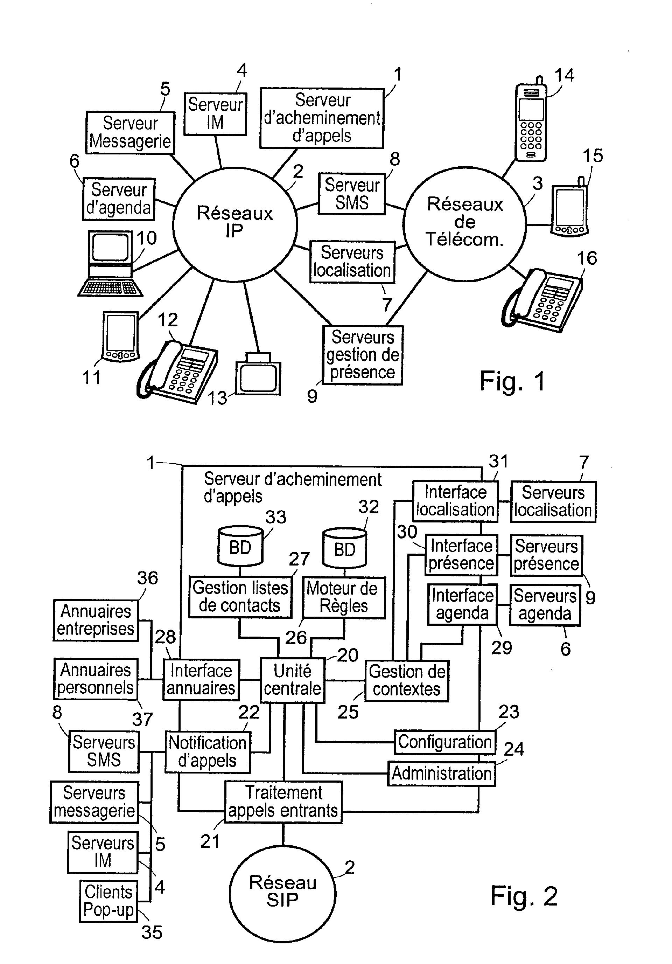

La figure 1 représente un système de transmission d'informations comprenant un ensemble de réseaux 2, 3 de télécommunications et de transmission de données, auxquels sont connectés des terminaux 10 à 16 d'utilisateurs et des serveurs 4 à 9 offrant des services spécialisés de communication. La référence 2 illustre un ensemble de réseaux de type IP (Internet Protocol), publics et/ou privés, par exemple le réseau Internet et des réseaux Intranet. La référence 3 illustre un ensemble de réseaux de téléphonie de type RTC (Réseau Téléphonique Commuté) ou mobile, par exemple conforme à la norme GSM (Global System for Mobile Communication), GPRS (Général Packet Radio Service) ou UMTS (Universal Mobile Télécommunication System).

Les terminaux connectés aux réseaux IP 2 sont par exemple de type ordinateur personnel 10, assistant personnel PDA (Personal Digital Assistant) 11, terminal téléphonique (téléphonie IP) 12, ou encore un poste de télévision 13 associé à un décodeur vidéo (Set Top Box). Ils peuvent être également des terminaux mobiles munis de moyens de communication GSM et/ou de faible portée tels que conformes aux normes Bluetooth ou Wi-Fi (Wireless Fidelity) (normes IEEE 802.11 a ou b), de manière à pouvoir communiquer avec un réseau local IP de type Intranet. Les terminaux connectés aux réseaux de téléphonie 3 sont de type téléphone fixe 16 à travers le protocole SIP (Session Initiation Protocol), téléphone mobile 14, assistant personnel communiquant 15 (par exemple équipé d'un module de télécommunication GSM).

Les serveurs de communication connectés aux réseaux IP 2 comprennent par exemple des serveurs de messagerie électronique 5 et de messagerie instantanée 4, des serveurs de gestion d'agenda 6 mémorisant pour chaque utilisateur des informations sur les activités prévues de l'utilisateur, des serveurs de gestion de présence 9 permettant de déterminer l'accessibilité ou la joignabilité des utilisateurs par l'un des réseaux 2, et des serveurs de localisation 7 donnant accès à des informations permettant de localiser les terminaux des utilisateurs, à savoir l'adresse IP de l'utilisateur dans le cas d'un réseau IP.

Les serveurs de communication connectés aux réseaux mobiles 3 comprennent des serveurs de transmission de messages courts 8, par exemple de type SMS (Service de Messages Courts) ou MMS (Multimedia Messaging Service), ces serveurs pouvant également être connectés à un réseau IP 2 pour permettre l'émission de messages courts à partir d'un terminal IP, des serveurs de gestion de présence 9 permettant de déterminer l'accessibilité ou la joignabilité des utilisateurs par l'un des réseaux 3, et des serveurs de localisation 7 donnant accès à des informations permettant de localiser les terminaux mobiles des utilisateurs.

Selon l'invention, ce système comprend également un serveur 1 d'acheminement d'appels, conçu pour permettre aux utilisateurs de choisir la façon (choix du protocole, du réseau et du terminal) dont vont lui être transmis les appels qui lui sont destinés. Les appels ainsi traités peuvent provenir d'un téléphone fixe (RTC ou IP) ou mobile.

A cet effet, le serveur 1 peut être conçu pour permettre à l'utilisateur de définir des contextes correspondant à des situations dans lesquelles l'utilisateur peut se trouver, telles que "au bureau et disponible", "au bureau et en réunion", "en déplacement", "sur un autre lieu de travail", "non joignable", "à la maison et disponible", "à la maison et occupé", etc.

A un instant donné, un contexte est actif pour chacun des utilisateurs du service d'acheminement d'appels, l'activation d'un contexte pouvant être déclenchée manuellement par l'utilisateur ou automatiquement en fonction d'un agenda dans lequel des périodes d'activation de ces contextes sont spécifiées.

Le serveur 1 est également conçu pour permettre à l'utilisateur de spécifier pour chaque contexte des règles de déclenchement d'une action ou d'un service en fonction d'une condition.
Une règle est caractérisée par deux éléments, à savoir une condition qui constitue l'élément déclencheur de la règle et une action qui est activée lorsque la condition est remplie, par exemple "sur occupation" (=condition), "renvoyer l'appel vers un autre terminal" (=action).

Les conditions peuvent porter sur les informations suivantes :
- l'état "occupé" ou "non réponse" du moyen de communication demandé par l'utilisateur appelant,
- l'identité de l'appelant ou du premier appelant en cas de renvoi d'appel,
- la date et heure de réception de l'appel, par exemple en correspondance avec l'agenda électronique de l'appelé,
- la priorité de l'appel, dans la mesure où cette information est disponible,
- l'état de présence de l'appelé qui indique si l'appelé est accessible par au moins terminal de communication, et un état de disponibilité,
- l'état du réseau (bande passante, infrastructure telle que liaison modem, LAN, ...),
- la localisation de l'appelé,
- des événements extérieurs au système, par exemple les conditions météorologiques, ...

Les actions disponibles peuvent être les suivantes :
- notifier l'appelé pour l'informer qu'une personne a cherché à le joindre, cette notification comportant les informations de l'appel, à savoir la date de réception de l'appel et l'identité de l'appelant,
- acheminer l'appel vers un service spécifié activable appartenant à l'ensemble des services auxquels l'utilisateur appelé a souscrit et qui sont utilisables dans le cadre du service d'acheminement d'appels (par exemple : transfert de l'appel vers une boîte vocale ou vers un autre numéro d'appel),
- rejeter l'appel, et
- proposer une liste de services activables appartenant à cet ensemble de services, et dans laquelle l'utilisateur appelé doit effectuer une sélection.

L'action de notification de l'appelé peut être associée à une indication du terminal et/ou du service à utiliser pour effectuer la notification (messagerie électronique, SMS, serveur vocal, message instantané affiché sur le téléviseur par l'intermédiaire du décodeur 13, fenêtre (pop-up) affichée à l'écran de l'ordinateur 10, ...).

Il est à noter que les contextes définis par les utilisateurs du service peuvent spécifier un terminal et/ou un service par défaut à utiliser pour effectuer les notifications d'appel.

Le terminal d'utilisateur est connecté à d'autres terminaux par un ensemble de réseaux de télécommunication et/ou de transmission de données et au moins un serveur d'acheminement d'appel. Il est configuré pour recevoir du serveur d'acheminement d'appel un signal de notification d'appel et comprend des moyens d'affichage de cette notification d'appels. Le signal de notification d'appel est associé à une liste de choix d'action à effectuer par l'utilisateur ; le terminal d'utilisateur comprenant des moyens de sélection par l'utilisateur d'un choix d'action dans la liste, et des moyens de transmission du choix en retour au serveur d'acheminement d'appel.

Dans le cas où une notification est effectuée sous la forme d'une fenêtre ("pop-up") apparaissant à l'écran d'un ordinateur ou d'un poste de télévision, l'ordinateur et le décodeur associé au poste de télévision disposent d'un applicatif conçu à cet effet.

La figure 2 montre un exemple d'architecture fonctionnelle du serveur d'acheminement d'appels 1 dans un réseau de téléphonie sur IP utilisant le protocole SIP (Session Initiation Protocol). Sur cette figure, le serveur présente avantageusement une architecture modulaire comprenant les modules suivants :
- une unité centrale 20 qui coordonne tous les traitements effectués par le serveur pour fournir le service d'acheminement d'appels,
- un module 21 de traitement des appels entrants,
- un module 22 de notification des appels entrants,
- un module 23 de configuration intégrant par exemple une interface Web accessible par l'intermédiaire d'un réseau IP 2 pour permettre à chacun des utilisateurs du service de configurer le service de traitement d'appel pour permettre à celui-ci de traiter les appels qui lui sont destinés,
- un module 24 d'administration intégrant par exemple une interface Web accessible par l'intermédiaire d'un réseau IP 2 pour permettre à un administrateur de gérer des comptes pour chacun des utilisateurs du service,
- un module 25 de gestion de contextes pour déterminer un contexte courant dans lequel se trouve chacun des utilisateurs du service,
- un module 26 de gestion de règles pour gérer les règles spécifiées par chacun des utilisateurs et à exécuter à la réception d'un appel entrant,
- un module 27 de gestion de listes de contacts pour gérer des listes de contacts pour chacun des utilisateurs du service, et
- un ensemble de modules d'interface 28 à 31 pour assurer l'interface entre le serveur d'acheminement d'appels et les serveurs tels que les serveurs d'agenda 6, de présence 9, d'annuaires 36, 37, et de localisation 7.

Le module 21 de traitement des appels entrants est réalisé sous la forme d'un serveur applicatif qui est activé à la réception d'un appel entrant reçu par l'intermédiaire du réseau 2. Ce module reçoit la signalisation d'appel contenant notamment les identifiants respectifs de l'appelé et de l'appelant, la transmet pour traitement à l'unité centrale 20, et exécute des ordres de transfert d'appel émis par celle-ci.

Le module 22 de notification de l'appelé est conçu pour notifier l'appelé de la réception d'un appel. Conformément à l'invention, cette notification peut être de deux types, à savoir un simple avertissement de l'arrivée de l'appel, ou un avertissement de l'appel avec présentation d'une liste de choix de traitements à appliquer à l'appel dans laquelle l'utilisateur doit effectuer un choix.

La notification peut être effectuée sous la forme d'un envoi de message électronique (email ou message instantané), ou dans une fenêtre qui est affichée à l'écran d'un ordinateur 10 ou d'un poste de télévision 13 connecté à un décodeur relié au réseau IP 2. Dans le cas où une liste de traitements est présentée, la notification est effectuée par un moyen de transmission permettant d'atteindre immédiatement l'utilisateur appelé, comme la messagerie instantanée ou SMS, ou le déclenchement de l'affichage d'une fenêtre sur un écran d'affichage (ordinateur, poste de télévision), en tenant compte d'informations de présence de l'utilisateur sur l'un ou l'autre des ces moyens de transmission et des règles spécifiées par l'utilisateur appelé.

Le module 23 de configuration du service permet à chaque utilisateur de spécifier un profil d'utilisateur regroupant :
- tous les paramètres nécessaires au service et notamment tous les paramètres permettant d'accéder aux différents moyens de communication (terminaux et services) que l'utilisateur est susceptible d'employer ou aux serveurs de gestion de présence 9 auprès desquels l'utilisateur est enregistré,
- des définitions de contextes correspondant chacun à une situation dans laquelle l'utilisateur a prévu de se trouver, et identifiant des moyens de communication utilisables pour joindre l'utilisateur en fonction d'un degré d'urgence, chaque contexte étant associé à un ensemble de règles à appliquer aux appels entrants.

Le module 23 de configuration est de préférence accessible via un réseau IP 2 tel que le réseau Internet, par l'intermédiaire d'une interface de configuration conviviale et ergonomique, par exemple un logiciel de navigation Internet. Lorsque l'utilisateur accède pour la première fois au service, il reçoit un identifiant et un mot de passe qui lui permettent par la suite de modifier son profil d'utilisateur ou d'introduire des commandes destinées au serveur d'acheminement d'appels.

Le module 25 de gestion des contextes est conçu pour déterminer un contexte courant d'un utilisateur appelé en fonction des informations fournies par les modules d'interface 29 à 31 d'agenda, de présence et de localisation.

Le module 30 d'interface de présence est enregistré comme client auprès de chaque serveur de gestion de présence de manière à être averti par ces derniers au moyen de notifications, de chaque changement d'état de présence des utilisateurs du service. A l'aide de ces notifications, le module d'interface 30 tient à jour pour chaque terminal d'utilisateur du service un état de présence, selon que l'utilisateur est joignable, en communication ou absent.

Le module 26 de gestion de règles est conçu pour vérifier la cohérence intrinsèque et entre elles, des règles fournies par chaque utilisateur par l'intermédiaire du module de configuration 23, et stocke ces règles dans une base de données 32. Ce module est appelé par l'unité centrale 20 pour déterminer la ou les règles applicables à un appel entrant en fonction du contexte courant de l'utilisateur appelé, et pour exécuter les règles ainsi sélectionnées, tout en s'assurant de leur cohérence, notamment pour empêcher les boucles, et pour renvoyer à l'unité centrale les actions à effectuer.

Le module 27 de gestion de listes de contacts gère des listes de contacts pour chaque utilisateur du service, les informations relatives à chaque contact figurant dans ces listes provenant de l'annuaire d'entreprise 36 ou personnel 37 de l'utilisateur, ces annuaires étant accessibles par l'intermédiaire d'un réseau IP et du module d'interface d'annuaires 28. Chacune des listes d'un utilisateur est réalisée par l'utilisateur par l'intermédiaire du module de configuration 23 et est caractérisée par un identifiant qui peut être utilisé dans la définition des règles.

Le module d'interface d'annuaires 28 est conçu pour interroger des annuaires d'entreprise et personnels dont les adresses sur le réseau IP sont fournies par les utilisateurs du service, afin de récupérer les informations (nom, numéro de téléphone, et éventuellement adresse, photo, etc.) relatives aux contacts des utilisateurs.

Des exemples d'utilisation du service sont maintenant décrits.
Dans un premier exemple, un utilisateur A a configuré le service à l'aide du module d'interface de configuration 23 en définissant un contexte "familial" pour lequel il introduit les règles suivantes :
- si un appel entrant arrive entre 21h00 et 23h00 et que l'appelant fait partie de la liste de contacts "amis", les actions possibles sont "prendre l'appel" et "rejeter l'appel", sinon la seule action possible est "renvoyer tous les appels vers la boîte vocale",
- si un appel entrant arrive entre 23h00 et 7h00, la seule action possible est "renvoyer tous les appels vers la boîte vocale".

Par ailleurs, dans le contexte "familial, l'utilisateur A a indiqué qu'il souhaite que tous les appels lui soient notifiés.

A 22h00, un utilisateur B appelle l'utilisateur A, B faisant partie de la liste de contacts "amis" de l'utilisateur A. Cet appel est reçu par le module de traitement des appels entrants 21 qui transmet à l'unité centrale 20 les informations de signalisation relatives à l'appel entrant, à savoir l'identifiant de l'appelant B (numéro de téléphone), et l'identifiant de l'appelé A (numéro de téléphone). L'unité centrale 20 appelle le module de gestion de contexte 25 en lui fournissant l'identifiant de l'appelé, pour obtenir le contexte courant dans lequel se trouve l'utilisateur appelé A. Le module de gestion de contexte détermine le contexte courant de l'appelé en faisant appel notamment au module d'interface d'agenda 29 et les terminaux accessibles de celui-ci en faisant appel au module d'interface de présence 30.

Dans l'exemple considéré, les terminaux accessibles sont le poste fixe 12 ou 16 de l'utilisateur A et le poste de télévision 13 qui est connecté au réseau IP par l'intermédiaire d'un décodeur.

L'unité centrale 20 appelle ensuite le module 26 de gestion des règles en lui fournissant l'identifiant de l'appelé, et le contexte courant de celui-ci. Le module 26 fournit en réponse les règles à exécuter compte tenu du contexte courant de l'appelé. L'unité centrale exécute ensuite les règles ainsi reçues à l'aide des informations relatives à l'appel entrant. A cet effet, pour déterminer si l'appelant B appartient à la liste de contact "amis" de l'utilisateur A, l'unité centrale fait appel au module de gestion des listes de contacts 27 en lui fournissant les identifiants de l'appelé et de l'appelant, ainsi que le nom de la liste de contacts. Le module 27 fournit le nom de l'appelant correspondant à l'identifiant reçu si celui-ci figure dans la liste indiquée.

En appliquant les règles reçues du module 26 de gestion des règles, l'unité centrale détermine que pour l'appelant B, il faut notifier à l'appelé A la liste des actions possibles "prendre l'appel", "rejeter l'appel". A partir de la liste des terminaux accessibles de l'appelé A, l'unité centrale détermine que cette notification peut être effectuée à l'aide du poste de télévision. L'unité centrale fait donc appel au module 22 de notification d'appels en lui fournissant l'identifiant de l'appelant, la liste à notifier et les informations permettant d'accéder au décodeur du poste de télévision de l'appelé A. Le module 22 transmet la liste d'actions à l'adresse du décodeur qui déclenche l'affichage des informations à notifier dans une fenêtre incrustée à l'écran du poste de télévision. L'appelé A voit ainsi apparaître à l'écran "appel de B, vous pouvez 1. prendre l'appel, 2. refuser l'appel".

L'appelé A peut alors sélectionner une option à l'aide d'une télécommande du téléviseur 13 associé à un décodeur, par exemple "prendre l'appel", ce choix étant transmis par le décodeur au module de notification 22, puis à l'unité centrale. L'unité centrale établit alors la communication entre les utilisateurs A et B en transférant l'appel vers un terminal accessible de l'appelé A.

Si l'appelant B n'est pas connu de l'appelé A, l'unité centrale notifie l'appel à ce dernier, toujours en utilisant le terminal de notification accessible et transfère l'appel vers la boîte vocale de l'appelé A.

Dans un autre exemple d'utilisation du service, un utilisateur A a configuré le service à l'aide du module d'interface de configuration 23 en définissant un contexte "bureau - réunion" pour lequel il introduit la règle suivante :
"si l'appelant est ma secrétaire", les actions possibles sont "prendre l'appel" et "transférer l'appel vers mon téléphone mobile", sinon "transférer tous les appels vers ma secrétaire".

Dans ce contexte, l'ordinateur 10 de l'utilisateur est accessible au serveur d'acheminement d'appels 1, de même que le téléphone mobile.

Si l'appelant est la secrétaire de l'appelé, le serveur d'acheminement d'appels déclenche l'affichage à l'écran de l'ordinateur de l'appelé le message suivant :
"appel de la secrétaire, vous pouvez 1. rejeter l'appel ou 2. transférer l'appel vers le téléphone mobile".

L'utilisateur appelé peut alors effectuer un choix par exemple à l'aide de la souris. Si l'appelé choisit la seconde option, le serveur d'acheminement d'appels déclenche le transfert de l'appel vers le téléphone mobile de l'appelé.

## Revendications

1. Procédé de gestion d'appels destinés à des utilisateurs de réseaux (2, 3) de télécommunications, chacun des utilisateurs disposant d'au moins un moyen de télécommunication (10 à 16) connectable à l'un des réseaux de télécommunication, le procédé comprenant des étapes au cours desquelles :
- les utilisateurs introduisent chacun au moins une règle d'acheminement d'appels associant au moins une condition appliquée à une caractéristique d'un appel entrant à une action d'acheminement de l'appel entrant, et
- un serveur d'acheminement d'appels (1) reçoit un appel téléphonique entrant destiné à un utilisateur, détermine les caractéristiques de l'appel entrant et les règles à appliquer à l'appel entrant, applique les règles déterminées pour identifier les actions à appliquer à l'appel entrant, et exécute les actions identifiées sur l'appel entrant,
**caractérisé en ce qu'**au moins certaines règles d'acheminement d'appels spécifiées par les utilisateurs comprennent plusieurs actions alternatives à sélectionner par l'utilisateur appelé au moment de la réception de l'appel entrant, le procédé comprenant en outre des étapes au cours desquelles :
- si plusieurs actions alternatives sont obtenues en exécutant les règles déterminées pour l'appel entrant, le serveur d'acheminement d'appels (1) transmet vers un moyen de communication accessible de l'utilisateur appelé, une notification d'appel entrant indiquant les actions alternatives parmi lesquelles l'utilisateur appelé doit effectuer un choix,
- le moyen de communication (10 à 12 et 14 à 16) de l'utilisateur appelé transmet au serveur d'acheminement d'appels une indication de l'action alternative choisie par l'utilisateur appelé, et
- le serveur d'acheminement d'appels traite l'appel entrant en exécutant l'action alternative choisie par l'utilisateur appelé.

2. Procédé selon la revendication 1,
**caractérisé en ce que** chacune des conditions des règles d'acheminement d'appels entrants porte sur au moins l'une des informations suivantes :
- l'identité de l'utilisateur appelant,
- l'identité du premier utilisateur appelant en cas de renvoi d'appel,
- un état "occupé" ou "non réponse" du moyen de communication demandé par l'utilisateur appelant,
- la date et heure de réception de l'appel,
- un niveau de priorité attribué à l'appel entrant,
- un état de présence de l'appelé, indiquant si l'appelé est accessible par au moins un terminal de communication,
- l'état du réseau (2, 3),
- la localisation de l'appelé, et
- des événements extérieurs au système.

3. Procédé selon la revendication 1 ou 2,
**caractérisé en ce que** les actions d'acheminement d'appels sont sélectionnées parmi les actions suivantes lors de l'introduction des règles d'acheminement d'appels entrants :
- notifier l'utilisateur appelé pour l'informer de l'arrivée d'un appel entrant,
- acheminer l'appel vers un service spécifié activable appartenant à l'ensemble des services auxquels l'utilisateur appelé a souscrit et qui sont utilisables dans le cadre du service d'acheminement d'appels,
- rejeter l'appel, et
- proposer une liste de services alternatifs activables appartenant à cet ensemble de services, et dans laquelle l'utilisateur appelé doit effectuer une sélection.

4. Procédé selon l'une des revendications 1 à 3,
**caractérisé en ce qu'**il comprend en outre une étape de détermination d'un état d'accessibilité de chacun des moyens de télécommunication (10 à 16) de chacun des utilisateurs.

5. Procédé selon l'une des revendications 1 à 4,
**caractérisé en ce qu'**il comprend en outre une étape de configuration du service d'acheminement d'appels au cours de laquelle chaque utilisateur spécifie un profil d'utilisateur regroupant :
- des paramètres nécessaires au serveur d'acheminement d'appels (1) comportant des paramètres d'accès aux moyens de communication (10 à 16) par lesquels l'utilisateur peut être joint et à des serveurs de gestion de présence (9) auprès desquels l'utilisateur est enregistré et fournissant un état d'accessibilité des moyens de communication,
- des définitions de contextes correspondant chacun à une situation dans laquelle l'utilisateur a prévu de se trouver, chaque contexte étant associé à des règles d'acheminement d'appels respectives à appliquer aux appels entrants, et
- des données d'agenda spécifiant des plages horaires durant lesquelles un contexte est activé.

6. Serveur d'acheminement d'appels destinés à des utilisateurs de réseaux (2, 3) de télécommunications, chacun des utilisateurs disposant d'au moins un moyen de télécommunication (10 à 16) connectable à l'un des réseaux de télécommunication, le serveur d'acheminement d'appels (1) comprenant des moyens pour recevoir des appels téléphoniques entrants destinés à des utilisateurs, des moyens pour déterminer les caractéristiques des appels entrants et des règles d'acheminement d'appels spécifiées par les utilisateurs à appliquer aux appels entrants, des moyens pour exécuter les règles afin d'identifier les actions à appliquer aux appels entrants, et des moyens pour exécuter les actions identifiées aux appels entrants,
**caractérisé en ce que** le serveur d'acheminement d'appels (1) comprend en outre :
- des moyens mis à la disposition des utilisateurs pour spécifier des règles d'acheminement d'appels comprenant une ou plusieurs actions alternatives à sélectionner par l'utilisateur appelé au moment de la réception de l'appel entrant,
- des moyens pour transmettre vers un moyen de communication (10 à 16) accessible d'un utilisateur appelé, une notification d'appel entrant indiquant les actions alternatives parmi lesquelles l'utilisateur appelé doit effectuer un choix, si plusieurs actions alternatives sont identifiées en exécutant les règles déterminées pour un appel entrant,
- des moyens pour recevoir des indications d'actions alternatives choisies par les utilisateurs appelés, et
- des moyens pour acheminer les appels entrants en exécutant les actions alternatives choisies par les utilisateurs appelés.

7. Serveur d'acheminement d'appels selon la revendication 6,
**caractérisé en ce que** le serveur d'acheminement d'appels (1) présente une architecture modulaire comprenant une unité centrale (20) et un ensemble de modules fonctionnels (21 à 31), l'unité centrale étant conçue pour coordonner les traitements effectués par les modules fonctionnels.

8. Serveur d'acheminement d'appels selon la revendication 6 ou 7,
**caractérisé en ce qu'**il comprend un module de configuration (23) permettant à chacun des utilisateurs de spécifier un profil d'utilisateur regroupant :
- des paramètres nécessaires au serveur d'acheminement d'appels (1) comportant des paramètres d'accès aux moyens de communication (10 à 16) par lesquels l'utilisateur peut être joint et à des serveurs de gestion de présence (5) auprès desquels l'utilisateur est enregistré et fournissant un état d'accessibilité des moyens de communication,
- des définitions de contextes correspondant chacun à une situation dans laquelle l'utilisateur a prévu de se trouver, chaque contexte étant associé à des règles d'acheminement d'appels respectives à appliquer aux appels entrants, et
- des données d'agenda spécifiant des plages horaires durant lesquelles un contexte est activé.

9. Serveur d'acheminement d'appels selon l'une des revendications 6 à 8,
**caractérisé en ce que** pour transmettre à un utilisateur appelé une notification d'appel entrant, le serveur d'acheminement d'appels (1) utilise au moins l'un des moyens de communication suivants :
- messagerie électronique,
- messagerie instantanée,
- message SMS,
- déclenchement d'affichage d'une fenêtre en surimpression sur un écran d'ordinateur, et
- déclenchement d'affichage d'une fenêtre en surimpression sur un écran de télévision connecté à un décodeur relié à un réseau IP.

10. Serveur d'acheminement d'appels selon l'une des revendications 6 à 9,
**caractérisé en ce que** le serveur d'acheminement d'appels (1) est connecté à au moins l'un des réseaux de téléphonie suivants :
- réseau de téléphonie mobile (3),
- réseau de téléphonie fixe (3),
- réseau de téléphonie IP utilisant le protocole SIP (2).

11. Serveur d'acheminement d'appels selon l'une des revendications 6 à 10 **caractérisé en ce que** les moyens pour exécuter les actions identifiées aux appels entrants et les moyens pour acheminer les appels entrants en exécutant les actions alternatives choisies par les utilisateurs appelés sont les mêmes (21).

12. Terminal d'utilisateur connecté à d'autres terminaux par un ensemble de réseaux de télécommunication et/ou de transmission de données et au moins un serveur d'acheminement d'appel, le terminal d'utilisateur étant configuré pour recevoir du serveur d'acheminement d'appel un signal de notification d'appel et comprenant des moyens d'affichage de cette notification d'appels, **caractérisé en ce que** le signal de notification d'appel est associé à une liste de choix d'action à effectuer par l'utilisateur ; le terminal d'utilisateur comprenant des moyens de sélection par l'utilisateur d'un choix d'action dans la liste, et des moyens de transmission du choix en retour au serveur d'acheminement d'appel.
